# EUROPÄISCHE PATENTSCHRIFT

(11) **EP 0 374 123 B1**
(45) Veröffentlichungstag und Bekanntmachung des Hinweises auf die Patenterteilung: **25.01.1995**
(21) Anmeldenummer: 89890314.1
(22) Anmeldetag: 11.12.1989
(51) Int. Cl.: B29C 45/17, A63B 49/10

(54) **Verfahren zur Herstellung eines Ballspielschlägerrahmens**
Method of manufacturing a ball game racket frame
Procédé de fabrication d'un cadre d'une raquette pour feux de balle

(30) Priorität: 15.12.1988 AT 3064/88
(43) Veröffentlichungstag der Anmeldung: 20.06.1990
(73) Patentinhaber: Head Sport Aktiengesellschaft, A-6921 Kennelbach (AT)
(72) Erfinder: Umlauft, Helmut, A-6971 Hard (AT); Wäger, Karl-Heinz, A-6840 Götzis (AT)
(74) Vertreter: Haffner, Thomas M., Dr.

(56) Entgegenhaltungen:
- EP-A- 0 250 080
- FR-A- 1 496 264
- GB-A- 2 015 886
- GB-A- 2 227 444
- KUNSTSTOFFE, Band 78, Nr. 9, September 1988, Seiten 767-771, München, DE; M. KLAMM et al.: "Gasinnendruckverfahren beim Spritzgiessen"
- KUNSTSTOFFE, Band 71, Nr. 7, Juli 1981, Seiten 420-424, München, DE; R. MERIDIES: "Verfahren zum Herstellen von Sandwich-Spritzgussteilen mit einem Gas als Kernkomponente"
- KUNSTSTOFFE, Band 76, Nr. 8, August 1986, Seiten 667-670, München, DE; T.PEARSON: "Formteilherstellung nach dem Cinpres-Verfahren"
- PLASTICS IN AUTOMOBILES, Februar 1989, Seiten 155-162, Society of Automotive Engineers, Inc., Warrendale, US; K.C. RUSCH: "Gas assisted injection molding - the new thermoplastic molding technology for exterior body panels"

## Beschreibung

Die Erfindung bezieht sich auf ein Verfahren zur Herstellung eines Ballspielschlägerrahmens, insbesondere Tennisschläger-, Squashschläger- oder Badmintonschlägerrahmens, mit einem Kopf und einem Schaft, bei welchem zumindest der Kopf und/oder der Schaft aus einem faserverstärkten Kunststoff als Hohlkörper ausgebildet wird.

Rahmen für Ballschläger, z.B. für Tennis, Squash und Badminton, wurden in der Vergangenheit meist aus Holz hergestellt. Ein hölzener Rahmen für einen Ballschläger zeigte einen komplizierten Aufbau, der viele Schichten und Laminate umfaßt, die miteinander verbunden werden mußten. Die Herstellung eines solchen Rahmens war ein schwieriger und zeitaufwendiger Vorgang. Derartige Holzkonstruktionen zeigen günstige Spieleigenschaften.

In jüngerer Vergangenheit wurden für den Schlägerbau hauptsächlich neue Materialien, wie Metall und verstärkte Kunststoffmaterialien, eingesetzt.

Auf Grund der höheren spezifischen Gewichte dieser Materialien ist es erforderlich geworden, Rahmenausführungen bzw. Konstruktionen zu entwickeln, die hohl sind, weil ansonsten das Gewicht des Schlägers unannehmbar hoch würde. Solche Rahmenhohlkonstruktionen können im Falle von Metallen durch einen Zieh- oder Extrudiervorgang erzeugt werden. Im Falle von verstärkten Kunststoffmaterialien können Hohlkörperkonstruktionen durch Laminiervorgänge und Umhüllung eines leichten Kernmaterials, z.B. Kunststoffschaum, oder durch Anwendung von einem Hohlformungsverfahren, z.B. Blasformungsverfahren, erreicht werden.

Aus der AT-B 381 864 ist bereits ein Verfahren der eingangs genannten Art bekanntgeworden, bei welchem einstückig mit einem als Hohlkörper ausgebildeten Schlägerkopf an den Wänden angeformte Stützen ausgebildet wurden. Die Ausbildung der Hohlräume erfolgte hiebei nach konventionellen Verfahren, wobei gemäß diesem Vorschlag ein bei niedriger Temperatur schmelzbarer Kern beim Spritzgießen verwendet wird. Auch aus der EP-A-188 127 ist es bereits bekanntgeworden, ein sogenanntes Schmelzkeruverfahren durchzuführen, bei welchem der zur Ausbildung des Hohlraumes miteingebrachte Kern nach dem Erstarren der Racketwandung durch Erhitzen herausgeschmolzen wurde. Dieses Verfahren ist sehr aufwendig, da der Niedertemperatur-Schmelzkern vorgeformt werden muß.

Ein Verfahren der eingangs genannten Art ist ebenfalls der GB-A 2 015 886 zu entnehmen, wobei für ein Spritzgießen mit einem verlorenen Kern gearbeitet wird, um den Hohlkörper des Schlägerrahmens herzustellen. Aus der Zeitschrif 2376 Kunststoffe, 78 (1988) Sept., No. 9, München, Carl Hanser Verlag, Seiten 767ff. ist weiters ein Gasinnendruckverfahren beim Spritzgießen bekannt geworden, wobei ein Gas in die Kunststoffschmelze injiziert wird. Das Gas bildet hiebei im Inneren des herzustellenden Formteiles an Stellen großer Wandstärke einen Hohlraum und übernimmt dort die Funktion des Nachdrucks.

Die konventionellen Spritzgußverfahren können, wie beim Spritzguß von Formkörpern üblich, bevorzugt mit Materialien durchgeführt werden, welche als Schmelze eingebracht werden. Derartige Materialien, wie sie für Spritzgußverfahren üblicherweise verwendet werden, sind bekannt. Derartige mit Spritzgußverfahren hergestellte Ballschläger weisen jedoch üblicherweise nicht jene hohe Steifigkeit und Festigkeit bei ausreichend niedrigem Gewicht, die für einen wirklich hochqualitativen Schläger erwünscht sind, auf. Bekannte Kunststoffschläger werden mit einem Kopfteil geformt, der nicht hohl ist, und ihr Verhältnis von Festigkeit zu Gewicht oder Steifigkeit zu Gewicht ist geringer als es für hochqualifizierte Ballspielschläger erwünscht ist. Somit sind diese Ballspielschläger weniger steif und weniger kräftig als jene aus einer Kombination aus kontinuierlichen Faden- oder Faser-Materialien und einer Matrix.

In jedem Fall kommen bei den bisher bekanntgewordenen Spritzgußverfahren für die Herstellung von Ballschlägerrahmen aufwendige Formen und teilweise verlorene Kerne zum Einsatz, um die für die Stabilität erforderlichen Stützen und Stege mitspritzen zu können. Das unter Umständen notwendige Rückgewinnen des Niedertemperatur-Schmelzkernes stellt einen zusätzlichen Zeitaufwand dar. Bei allen diesen Herstellungsverfahren verbleiben Stege zwischen den Wandungen, welche prinzipiell nur geringe Festigkeiten zusätzlich bieten, da die Stege statisch gesehen in der neutralen Zone des Rahmens liegen und daher nur als Zusatzgewichte einen störenden Einfluß auf das Schwingungsverhalten bzw. die Balance des Rahmens ausüben können.

Aus der DE-A1 34 16 377 ist ein weiteres Spritzgußverfahren für Tennisschlägerrahmen bekanntgeworden, bei welchem zur Erzielung der erforderlichen Stabilität besonders aufwendige Maßnahmen getroffen wurden. Im besonderen besteht das aus dieser DE-A1 34 16 377 bekanntgewordene Verfahren darin, eine Mehrzahl von Spritzgußteilen durch Schweißen, Kleben und gegebenenfalls Schrauben miteinander zu verbinden. Rippen, Stege, Stützen und Verbindungen sind bei diesen konventionellen Spritzgußverfahren verfahrensbedingt.

Bei allen bisher bekanntgewordenen Spritzgußverfahren konnte eine Änderung der Wandstärken dadurch erreicht werden, daß mit mehreren Formen gearbeitet wird und mehrere Teile nachträglich miteinander verbunden wurden. Bei Anformung von Stegen mit Durchbrechungen für die Aufnahme der Besaitung wird die definitive Lage der für die Besaitung vorgesehenen Löcher bereits in der Form festgelegt, und es ist nachträglich nicht ohne weiteres möglich, in der Folge die Bespannung zu ändern.

Das zusätzlich in nicht exakt kontrollierbarer Weise eingebrachte Material für die Stützen bzw. Stege führt darüber hinaus zu einer Gewichtserhöhung und zu einem definitiven festgelegten Schwingungsverhalten bzw. zu wesentlichen Beschränkungen in bezug auf die Balance des Schlägers.

Um derartige Rippen, Stege, Stützen und Verbindungen zu vermeiden, ist bisher prinzipiell ein besonders arbeitsaufwendiges Verfahren bekanntgeworden, bei welchem teilausgehärtetes Material in Form von Folien zum Einsatz gelangte.

Derartiges Material muß zur Herstellung kräftiger leichtgewichtiger Gegenstände, wie zur Herstellung von Schlägerrahmen, um einen Kernaufbau herumgeformt werden, wobei dieser Kernaufbau beim Formungsvorgang expandieren soll, um eine zufriedenstellende Verfestigung zu ergeben. Ein derartiger expandierbarer Kern kann aus einem expandierbaren Kunststoffmaterial gebildet sein oder als aufblasbarer Schlauch, z.B. als Silikongummischlauch, zum Einsatz gelangen, welcher erforderlichenfalls nachher aus dem geformten Gegenstand entfernt werden kann. Eine derartige Verfahrensweise ist naturgemäß überaus arbeitsaufwendig, insbesondere daher, daß die verwendeten wärmehärtenden Harze während mehrerer Minuten auf entsprechend hoher Temperatur gehalten werden müssen, um die Aushärtung zu gewährleisten, und daß für eine Massenherstellung deshalb eine Vielzahl von Formen erforderlich ist.

Die Erfindung zielt nun darauf ab, ein Verfahren der eingangs genannten Art zu schaffen, mit welcher unmittelbar ein Ballspielschlägerrahmen erzielt werden kann, welcher ohne Änderungen der Form in weitem Ausmaß bezüglich seiner Balance, seines Schwingungsverhaltens, seiner Gewichtsverteilung und seiner Stabilitätseigenschaften an die jeweiligen Bedürfnisse angepaßt werden kann und welcher unmittelbar zu reproduzierbaren Wandstärken mit verbesserten Oberflächeneigenschaften führt und mit welchem Rippen, Stege od.dgl. vermieden werden können. Zur Lösung dieser Aufgabe besteht das erfindungsgemäße Verfahren im wesentlichen darin, daß ein Matrix-System gegebenenfalls mit einem Verstärkungsfasermaterial und ein Inertgas unter Druck, insbesondere N₂, zur Ausbildung des Hohlraumes des Hohlkörpers in eine Form eingespritzt werden, und daß die Form zur Ausbildung unterschiedlicher Wandstärken partiell beheizt und/oder gekühlt wird, wobei zur Erzielung einer größeren Wandstärke der entsprechende Bereich der Form auf geringerer Temperatur gehalten wird als Bereiche für die Erzielung geringerer Wandstärke. Nach dem Erstarren des Kunststoffes im Formwerkzeug kann der Ballspielschlägerrahmen aus dem Formwerkzeug entnommen werden. Als Matrix wird hiebei vorwiegend thermoplastischer Kunststoff verwendet.

Spritzgußverfahren, bei welchen Hohlräume mit Stickstoff unter Druck ausgebildet werden, sind hiebei, wie oben erläutert, prinzipiell bekannter Stand der Technik. Die Anwendung dieses bekannten Verfahrens für die Herstellung von Ballspielschlägerrahmen ergibt aber im Zusammenhang mit den geforderten Eigenschaften von Ballspielschlägerrahmen eine Reihe von zusätzlichen Vorteilen, wobei neben der Erzielung einer besonders dichten und glatten Oberfläche auch die Möglichkeit, die Wandstärke des Materials beeinflussen zu können, von besonderer Bedeutung ist.

Zur gezielten Beeinflussung der Ballschläger-Wandstärke und damit zur Veränderung der Festigkeit, der Balance und des Gewichtes des Ballspielschlägerrahmens wird das erfindungsgemäße Verfahren hiebei so durchgeführt, daß die Form zur Ausbildung unterschiedlicher Wandstärken partiell beheizt und/oder gekühlt wird, wobei zur Erzielung einer größeren Wandstärke der entsprechende Bereich der Form auf geringerer Temperatur gehalten wird als Bereiche für die Erzielung geringerer Wandstärken. Dadurch, daß zur Ausbildung unterschiedlicher Wandstärken partiell beheizt und/oder gekühlt wird, wird eine exakte Temperaturführung im engsten Toleranzbereich über den gesamten Formbereich gewährleistet. Durch unterschiedlichen Temperaturverlauf innerhalb der Werkzeugform, kann die Wandstärke präzise und gezielt beeinflußt werden. Die regionale Abkühlung von Teilbereichen der Form führt hiebei durch vorzeitiges Erstarren der Matrix im gekühlten Bereich zur Ausbildung einer dickeren Wandstärke und damit zu einer Gewichtsanhäufung in diesem Bereich, wodurch die Balance und auch das Schwingungsverhalten in einstellbarer Weise verändert werden können. Insbesondere wird es durch Einstellung eines Temperaturgradienten möglich, einen kontinuierlichen Wandstärkenverlauf sicherzustellen, welcher zu besonders vorteilhaften Schwingungseigenschaften ausgenützt werden kann.

Der Begriff "Thermoplast" wird als Bezeichnung für Kunststoffmaterial verwendet, welches unter Wärmeeinwirkung und Druck wiederholt formbar ist.

Im Falle von thermoplastischem Material wird eine nach Gewicht oder Volumen dosierte Rohstoffmenge in einem beheizten Zylinder verdichtet und plastifiziert. Die Schmelze wird durch eine Düse in ein Formwerkzeug gespritzt und nach dem Erstarren entformt.

Im Falle von wärmehärtendem duroplastischen Material erfolgt das Einspritzen des im wesentlichen frei fließenden Materials in eine beheizte Form, in der nachfolgend das Aushärten stattfindet.

Die Verwendung von Inertgas unter Druck und, wie es einer bevorzugten Ausführung entspricht, unter einem Druck von 250 bis 600 bar, vorzugsweise etwa 400 bar, ergibt hiebei unmittelbar eine besonders glatte Oberfläche, welche ohne aufwendiges Nacharbeiten als definitive Oberfläche verwendet werden kann. Es kann unmittelbar eine komplette Hohlkörperkonstruktion, wobei auf zusätzliche Zwischenwandungen, Rippen und Stege verzichtet werden kann, welche die geforderte Festigkeit, Starrheit und ein entsprechend dichtes Gefüge in der Wand des Hohlkörpers aufweist, erhalten werden.

Die Maßnahme, die Bohrungen für die Saiten in einem gesonderten Arbeitsgang erst anschließend herzustellen, stellt zwar einen Mehraufwand dar, welcher sich jedoch gleichfalls weitgehend automatisieren läßt. Diesem Mehraufwand steht der Vorteil der freien Wahl der Besaitungsanordnung bei gleichem Ballspielschlägerrahmen gegenüber.

Prinzipiell lassen sich unter gleichzeitiger Anwendung von Inertgas, wie beispielsweise Stickstoff, unter Druck eine Reihe von Kunststoffen im Spritzguß verarbeiten, wobei bevorzugt das Verfahren so durchgeführt wird, daß als Matrix Kunststoffe, insbesondere
- Polyimide: PI
- Polyamidimide: PAI
- Polyphenylensulphone: PPSU
- Polyethersulphone: PES
- Polyetherimide: PEI
- Polysulphone: PSU
- Polyarylester:
- Polyetherketone: PEK
- Polyetheretherketone: PEEK
- Polyphenylensulphide: PPS
- Polycarbonate: PC
- Polyacetal: POM
- Polyamid 66: PA 66
- Polyamid 6: PA 6
- Polyamid 11: PA 11
- Polyamid 12: PA 12
- Polyethylenterephthalate: PET
- Polybutylenterephthalate: PBT
- Polyphenylenoxid: PPO
- thermopl. Polyester: PBTB
eingesetzt werden.

Je nach Wahl des Kunststoffes kann es hiebei vorteilhaft sein, Verstärkungsfasermaterial in an sich bekannter Weise mitzuverwenden, wobei sich im Rahmen des erfindungsgemäßen Verfahrens der Einsatz von Verstärkungsfasermaterial in Längen zwischen 1 und 10 mm, insbesondere in Längen bis zu 5 mm, als besonders günstig erwiesen hat. Insbesondere bei kürzeren Faserlängen kann hiebei eine weitgehend statistische Verteilung der Orientierung der Fasern sichergestellt werden, so daß ein homogener Aufbau der Verstärkung sichergestellt ist. Derartige Faserlängen eignen sich insbesondere dann, wenn das erfindungsgemäße Verfahren rasch durchgeführt werden soll und mit kurzer Zykluszeit die Matrix und das Verstärkungsmaterial eingespritzt und der erforderliche Inertgasdruck aufgebaut werden soll. In bei anderen Verfahren bekannter Weise kann hiebei so vorgegangen werden, daß das Verstärkungsfasermaterial in Mengen von 5-50 Gew.-%, vorzugsweise 20-50 Gew.-%, bezogen auf die Matrix eingesetzt wird.

Mit Rücksicht auf die Ausbildung unterschiedlicher Wandstärken auf Grund des zuvor eingestellten Temperaturverlaufes in der Spritzgußform ist es besonders vorteilhaft, die Kunststoffmenge, welche als Schmelze eingebracht werden soll, so einzustellen, daß Kunststoff in einer Menge eingebracht wird, welche Wandstärken zwischen 0,8 und 3 mm ergibt. Ein derartiges weites Maß an Veränderbarkeit der Wandstärke ist mit konventionellen Spritzgußverfahren mit einem Formwerkzeug nicht erzielbar. Als Verstärkungsfasermaterial können hiebei die bekannten Kohlefasern, Glasfasern und/oder Aramidfasern eingesetzt werden.

Mit Vorteil wird das erfindungsgemäße Verfahren so durchgeführt, daß die Form auf Temperaturen zwischen 60 und 90°C und vorzugsweise auf Temperaturen zwischen 70 bis 80°C gehalten wird, wobei bei Anwendung eines Inertgasdruckes zwischen 250 und 600 bar, bei etwa 400 bar ein besonders hohes Maß an Reproduzierbarkeit der Ergebnisse erzielt wurde. Als Inertgas kommen prinzipiell nichtbrennbare Medien in Betracht, wobei sich Stickstoff als besonders vorteilhaft herausgestellt hat und ein hohes Maß an Wirtschaftlichkeit gewährleistet. Bei bekannten Einrichtungen zur Herstellung von Gas-Mould Spritzgußprodukten wurde darüber hinaus für die Erhöhung der Wirtschaftlichkeit bereits vorgeschlagen, das Inertgas nach dem Erstarren der Matrix und vor dem Entformen des Schlägers wieder abzusaugen, so daß eine neuerliche Verwendung des Inertgases möglich wird.

Der Inertgasdruck kann hiebei die Funktion des Nachdruckes beim Spritzgießen übernehmen, so daß Oberflächenfehler mit Sicherheit vermieden werden können. Insgesamt ergibt sich damit unmittelbar ein Ballspielschlägerrahmen, welcher ohne weitere Oberflächennachbehandlung, wie beispielsweise Schleifen, Kitten, Polieren und Lackieren Verwendung finden kann.

Mit Rücksicht auf die hohe Präzision bezüglich Maßhaltigkeit und Einstellbarkeit der Wandstärken sind auch nachträgliche Ausgleichsarbeiten zur Erzielung der gewünschten Balance nicht erforderlich, und es können insbesondere Vorgänge wie das nachträgliche Anbringen von Gewichten oder das Abschleifen von Wandstärken zur Erzielung geringerer Wandstärken entfallen. Da unmittelbar ein Hohlprofil mit in Umfangsrichtung geschlossener Kontur erzielt wird, entfallen auch die bei bisher bekannten Herstellungsverfahren von aus Hohlprofilen ausgebildeten Ballspielschlägerrahmen erforderlichen Verklebungen von Schalenteilen, und die nach einer derartigen Verklebung erforderlichen Nachbearbeitungen. Als besonders vorteilhaft hat sich im Rahmen des erfindungsgemäßen Verfahrens die Verwendung von Polyamid 6.6 in Verbindung mit Kohlefasern mit einem Gewichtsanteil von 20 bis 50 Gew.-% bezogen auf die Schmelze bei einer maximalen Faserlänge von etwa 5 mm herausgestellt.

## Patentansprüche

1. Verfahren zur Herstellung eines Ballspielschlägerrahmens, insbesondere Tennisschläger-, Squashschläger- oder Badmintonschlägerrahmens, mit einem Kopf und einem Schaft, bei welchem zumindest der Kopf und/oder der Schaft aus einem faserverstärkten Kunststoff als Hohlkörper ausgebildet wird, dadurch gekennzeichnet, daß ein Matrix-System gegebenenfalls mit einem Verstärkungsfasermaterial und ein Inertgas unter Druck, insbesondere N₂, zur Ausbildung des Hohlraumes des Hohlkörpers in eine Form eingespritzt werden, und daß die Form zur Ausbildung unterschiedlicher Wandstärken partiell beheizt und/oder gekühlt wird, wobei zur Erzielung einer größeren Wandstärke der entsprechende Bereich der Form auf geringerer Temperatur gehalten wird als Bereiche für die Erzielung geringerer Wandstärke.

2. Verfahren nach Anspruch 1, dadurch gekennzeichnet, daß das Inertgas unter einem Druck von 250 bis 600 bar, vorzugsweise etwa 400 bar, eingebracht wird.

3. Verfahren nach Anspruch 1 oder 2, dadurch gekennzeichnet, daß die Form auf Temperaturen zwischen 60 und 90°C, vorzugsweise 70 bis 80°C, gehalten wird.

4. Verfahren nach einem der Ansprüche 1, 2 oder 3, dadurch gekennzeichnet, daß Kunststoff in einer Menge eingebracht wird, welche Wandstärken zwischen 0,8 und 3 mm ergibt.

5. Verfahren nach einem der Ansprüche 1 bis 4, dadurch gekennzeichnet, daß das Verstärkungsfasermaterial in Längen zwischen 1 und 10 mm eingesetzt wird.

6. Verfahren nach einem der Ansprüche 1 bis 5, dadurch gekennzeichnet, daß das Verstärkungsfasermaterial in Mengen von 5-50 Gew.-%, vorzugsweise 20-50 Gew.-%, bezogen auf die Schmelze eingesetzt wird.

7. Verfahren nach einem der Ansprüche 1 bis 6, dadurch gekennzeichnet, daß als Verstärkungsmaterial Kohlefasern, Glasfasern und/oder Aramidfasern eingesetzt werden.

8. Verfahren nach einem der Ansprüche 1 bis 7, dadurch gekennzeichnet, daß als Matrix spritzgießfähige Kunststoffe, insbesondere
Polyimide PI
Polyamidimide PAI
Polyphenylensulphone PPSU
Polyethersulphone PES
Polyetherimide PEI
Polysulphone PSU
Polyarylester
Polyetherketone PEK
Polyetheretherketone PEEK
Polyphenylensulphide PPS
Polycarbonate PC
Polyacetal POM
Polyamid 66 PA 66
Polyamid 6 PA 6
Polyamid 11 PA 11
Polyamid 12 PA 12
Polyethylenterephthalate PET
Polybutylenterephthalate PBT
Polyphenylenoxid PPO
thermopl. Polyester PBTB
eingesetzt werden.

## Claims

1. Process for the production of a racquet frame, in particular a tennis, squash or badminton racquet frame, with a head and a shaft, wherein at least the head and/or the shaft are constructed as hollow bodies made from a fibre-reinforced plastic, characterised in that a matrix system, optionally with a fibrous reinforcing agent, and an inert gas under pressure, in particular N₂, are injected into a mould to construct the hollow body, and that the mould is partially heated and/or cooled to produce different wall thicknesses, in which case to produce a higher wall thickness the corresponding area of the mould is held at a lower temperature than areas for the production of lower wall thickness.

2. Process according to Claim 1, characterised in that the inert gas is introduced under a pressure of 250 to 600 bar, preferably about 400 bar.

3. Process according to Claim 1 or 2, characterised in that the mould is kept at temperatures between 60° and 90°C, preferably 70° to 80°C.

4. Process according to one of Claims 1, 2 or 3, characterised in that plastic is injected in a such quantity as to produce wall thicknesses between 0.8 and 3 mm.

5. Process according to one of Claims 1 to 4, characterised in that the fibrous reinforcing agent is used in lengths of between 1 and 10 mm.

6. Process according to one of Claims 1 to 5, characterised in that the fibrous reinforcing agent is used in quantities of 5-50% by weight, preferably 20-50% by weight, calculated on the basis of the melt.

7. Process according to one of Claims 1 to 6, characterised in that carbon fibres, glass fibres and/or aramide fibres are used as reinforcing agent.

8. Process according to one of Claims 1 to 7, characterized in that plastics which may be injection-moulded are used as matrix, in particular:
polyimides PI
polyamide imides PAI
polyphenylene sulphones PPSU
polyether sulphones PES
polyether imides PEI
polysulphones PSU
polyarylesters
polyether ketones PEK
polyether ether ketones PEEK
polyphenylene sulphides PPS
polycarbonates PC
polyacetals POM
polyamide 66 PA 66
polyamide 6 PA 6
polyamide 11 PA 11
polyamide 12 PA 12
polyethylene terephthalates PET
polybutylene terephthalates PBT
polyphenylene oxide PPO
thermoplastic polyesters PBTB.

## Revendications

1. Procédé pour la fabrication d'un cadre d'une raquette pour jeux de balle, en particulier d'un cadre pour une raquette de tennis, une raquette de squash ou une raquette de badminton, avec une tête et un manche, où au moins la tête et/ou le manche est configuré en corps creux en une matière synthétique renforcée de fibres, caractérisé en ce qu'un système d'une matrice, le cas échéant avec un matériau fibreux de renforcement et un gaz inerte ou sous pression, en particulier N₂, pour la formation de la cavité du corps creux, est injecté dans un moule, et en ce que le moule est partiellement chauffé et/ou refroidi pour la formation de diverses épaisseurs de paroi, et pour obtenir une plus grande épaisseur de paroi, la zone correspondante du moule est maintenue à plus basse température que les zones pour obtenir de plus faibles épaisseurs de paroi.

2. Procédé selon la revendication 1, caractérisé en ce que le gaz inerte est introduit sous une pression de 250 à 600 bars, avantageusement d'environ 400 bars.

3. Procédé selon la revendication 1 ou 2, caractérisé en ce que le mou le est maintenu à une température entre 60 et 90°C, avantageusement entre 70 et 80°C.

4. Procédé selon l'une quelconque des revendications 1, 2 ou 3, caractérisé en ce que la matière synthétique est introduite en une quantité qui donne des épaisseurs de paroi comprises entre 0,8 et 3 mm.

5. Procédé selon l'une quelconque des revendications 1 à 4, caractérisé en ce que le matériau fibreux de renforcement est utilisé en longueurs comprises entre 1 et 10 mm.

6. Procédé selon l'une quelconque des revendications 1 à 5, caractérisé en ce que le matériau fibreux de renforcement est utilisé en quantités de 5-50% en poids, avantageusement de 20-50% en poids, en se rapportant au produit fondu .

7. Procédé selon l'une quelconque des revendications 1 à 6, caractérisé en ce qu'on utilise, en tant que matériau fibreux de renforcement, des fibres de carbone, des fibres de verre et/ou des fibres Aramid.

8. Procédé selon l'une quelconque des revendications 1 à 7, caractérisé en ce qu'on utilise, en tant que matrice, une matière synthétique pouvant être moulée par injection, en particulier
Polyimide PI
Polyamidimide PAI
Polyphénylensulfone PPSU
Polyéthersulfone PES
Polyétherimide PEI
Polysulfone PSU
Polyarylester
Polyéthercétone PEK
Polyétheréthercétone PEEK
Sulfure de polyphénylène PPS
Polycarbonate PC
Polyacétal POM
Polyamide 66 PA 66
Polyamide 6 PA 6
Polyamide 11 PA 11
Polyamide 12 PA 12
Polyéthylènetéréphtalate PET
Polybutylènetéréphtalate PBT
Oxyde de polyphénylène PPO
Polyester thermoplastique PBTB
